**Europäisches Patentamt**

**European Patent Office**

**Office européen des brevets**

(19)

(11) Veröffentlichungsnummer: **0 088 873**
**B1**

(12) # EUROPÄISCHE PATENTSCHRIFT

(45) Veröffentlichungstag der Patentschrift:
**15.07.87**

(51) Int. Cl.⁴: **B 60 C 11/00**

(21) Anmeldenummer: **83100896.6**

(22) Anmeldetag: **01.02.83**

(54) **Fahrzeugluftreifen mit profilierter Lauffläche.**

(30) Priorität: **13.03.82 DE 3209167**

(43) Veröffentlichungstag der Anmeldung:
**21.09.83 Patentblatt 83/38**

(45) Bekanntmachung des Hinweises auf die Patenterteilung:
**15.07.87 Patentblatt 87/29**

(84) Benannte Vertragsstaaten:
**AT BE CH DE FR GB IT LI NL SE**

(56) Entgegenhaltungen:
**DE - A - 2 854 364**
**DE - A - 2 912 546**
**FR - A - 2 163 396**
**FR - A - 2 452 391**
**FR - A - 2 452 392**
**LU - A - 79 499**
**US - A - 3 986 545**
**US - A - 4 055 209**

(73) Patentinhaber: **Continental Gummi-Werke Aktiengesellschaft, Königsworther Platz 1, D-3000 Hannover 1 (DE)**

(72) Erfinder: **Burchert, Helmut, Dr.-Ing., Brillantweg 4, D-3008 Garbsen 1 (DE)**
Erfinder: **Hettling, Klaus, Ing. grad., Klosterweg 17, D-3008 Garbsen 2 (DE)**
Erfinder: **Pfeiffer, Hans Dieter, Herschelstrasse 27, D-3008 Garbsen 4 (DE)**

## Beschreibung

Die Erfindung betrifft einen Fahrzeugluftreifen, insbesondere für die Winterverwendung, mit profilierter Lauffläche mit von zickzackförmigen Nuten begrenzten Blockreihen, gemäss dem Oberbegriff des Anspruchs 1. Ein derartiger Reifen ist z. B. aus der US-A-3 986 545 bekannt.

Der Erfindung liegt im wesentlichen die Aufgabe zugrunde, eine Laufflächenprofilierung vorzuschlagen, die insbesondere bei der Winterverwendung, also auf Matsch und Schnee eine hohe Traktionswirkung und eine gute Bremswirkung ermöglicht. Zudem werden hohe Laufgeschwindigkeiten und gleichmässige Abnutzungen über die Breite der Lauffläche hinweg angestrebt.

Die Lösung dieser Aufgabe bei einem gattungsgemässen Reifen ist erfindungsgemäss im kennzeichnenden Teil des Anspruchs 1 angegeben. Die einzelnen Reihen sind allerdings so in bezug auf die Reifenquerrichtung verlegt, dass sie mit dieser einen Winkel von 5 bis 10°, vorzugsweise aber einen Winkel von 7° einschliessen.

Bei einer solchen Reifenprofilierung wird bewusst auf umlaufende Profilnuten verzichtet, die entweder gestreckt oder zickzackförmig gestaltet sind.

Die Blöcke einer Reihe befinden sich gewissermassen vor der Mündung einer Nut, welche die beiden benachbarten Blöcke der benachbartliegenden Reihe zwischen sich einschliessen. Hierdurch ergibt sich eine vergleichsweise grosse Traktionswirkung, und zwar auch dann, wenn der Untergrund des Reifens vergleichsweise weich ist. Die schrägverlaufenden Blockreihen haben dabei ein relativ geringes Laufgeräusch zur Folge; diese Wirkung wird auch dadurch unterstützt, dass die die Blöcke begrenzenden Kanten alle im Winkel zur Reifenquerrichtung verlaufen. Obwohl die einander gegenüberliegenden Kanten der sechseckigen Blöcke parallel zueinander gerichtet sind, verlaufen diese Kanten schräg zur Reifenquerrichtung.

Ein Ausführungsbeispiel der Erfindung ist in der Zeichnung dargestellt. Es zeigen:

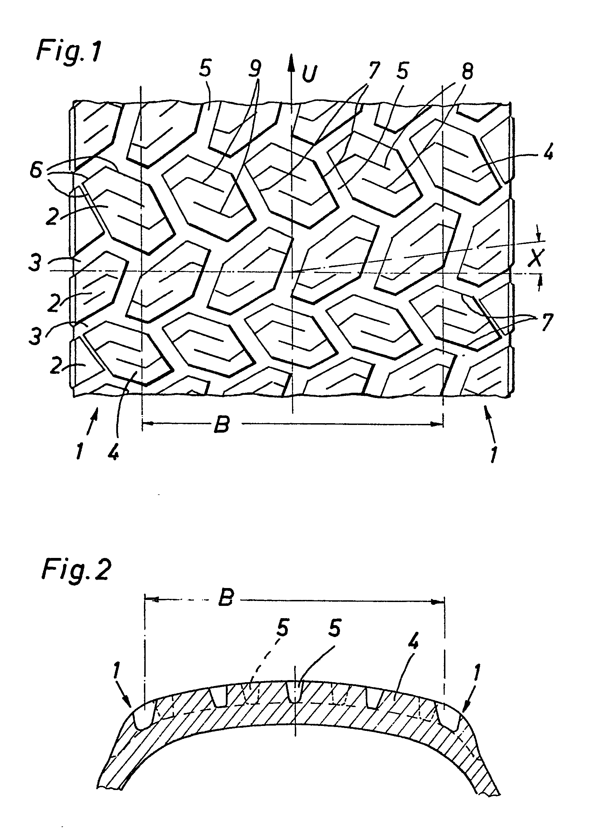

Fig. 1 eine Teildraufsicht auf die Laufflächenprofilierung eines Winterreifens und

Fig. 2 einen radialen Teilschnitt durch den Reifen gemäss Fig. 1.

Die Umfangsrichtung des Reifens ist mit U bezeichnet; die Lauffläche hat eine Breite B; die zu beiden Seiten dieser Lauffläche befindlichen Teile der Reifenaussenfläche bei 1 bilden abgerundete Schulterflächen, die sich an die eigentliche Lauffläche anschliessen und nur unter besonderen Bedingungen mit der Fahrbahn in Berührung kommen.

Die Lauffläche wird von im wesentlichen einander parallelen Blockreihen 2 gebildet, die eine geringfügig unterschiedliche Umfangserstrekkung haben und mit der Reifenquerrichtung einen Winkel x bilden, der etwa 7° beträgt.

Die Blockreihen 2 sind durch ebenso schräg verlaufende Zickzacknuten 3 voneinander getrennt, jedoch sind die Blöcke 4 einer Blockreihe 2 gegenüber den Blöcken 4 der benachbarten Blockreihe 2 so versetzt, dass sie mit ihren Endabschnitten vor den Schrägnuten 5 liegen, welche die Blöcke 4 einer Blockreihe 2 voneinander trennen.

Da die Blöcke 4 einer Blockreihe 2 in die eine Schrägrichtung zeigen und die Blöcke 4 der benachbarten Blockreihe 2 in die entgegengesetzte Schrägrichtung (Schräganstieg für beide Richtungen etwa 30 bis 50° in bezug auf die Reifenumfangsrichtung), ergibt sich auch für die Schrägnuten 5 ein entsprechender Schräganstieg.

Alle Blöcke 4 werden von sechs Kanten 6 begrenzt, von denen einander gegenüberliegende Kanten 6 parallel verlaufen. Diese Kanten 6 sind aber wiederum so angeordnet, dass keine Kante genau in Umfangsrichtung und keine Kante 6 in Reifenquerrichtung, also in Richtung der Rotationsachse des Reifens verläuft. Dies hat zur Folge, dass das Laufgeräusch sehr gering ist.

Die einander parallelen Kanten 6, die je einander zugehören, sind mit 7 bezeichnet.

Jeder Block hat ausserdem von gegenüberliegenden Kanten ausgehende, paarweise zusammengehörige Feineinschnitte 8, die winkelförmig gestaltet sind in der Weise, dass ihre mittig im Block 4 befindlichen Schenkel 9 parallel zueinander gerichtet sind. Auch diese Einschnitte 8 nehmen einen Schrägverlauf ein, den benachbarten Kanten 6 bzw. 7 der Blöcke 4 entsprechend.

## Patentansprüche

1. Fahrzeugluftreifen mit profilierter Lauffläche für die Winterverwendung, mit von zickzackförmigen Nuten begrenzten Blockreihen, wobei die Blöcke (4) langgestreckt, mit ihrer Längsachse schräg zur Reifenumfangsrichtung anstehend ausgebildet sind und quer zur Umfangsrichtung des Reifens verlaufende Reihen (2) bilden in der Weise, dass ein Block einer Reihe vor einer Nut (5) endet, die sich zwischen benachbarten Blöcken (4) der benachbarten Reihe befinden und wobei weiterhin die Reihen (2) untereinander parallel verlaufen und mit der Reifenquerrichtung einen spitzen Winkel einschliessen, dadurch gekennzeichnet, dass die Blöcke (4) sechseckig gestaltet sind und nur einander parallele Kantenpaare (7) aufweisen, dass jede Kante (6) der Blöcke (4) mit der Reifenquerrichtung und mit der Reifenumfangsrichtung einen Winkel einschliesst und dass die Längsachsen der Blöcke (4) einer Reihe (2) in eine Schrägrichtung und die Blöcke (4) der benachbarten Reihe in die entgegengesetzte Schrägrichtung zeigen, die durch einen Winkel von etwa 30 bis 50° in bezug auf die Reifenumfangsrichtung bestimmt ist.

2. Fahrzeugluftreifen nach Anspruch 1, dadurch gekennzeichnet, dass der spitze Winkel, den die Blockreihen (2) mit der Reifenquerrichtung bilden, zwischen 5 und 10°, vorzugsweise bei 7° liegt.

3. Fahrzeugluftreifen nach Anspruch 1, dadurch gekennzeichnet, dass jeder Block (4) zwei von gegenüberliegenden Kanten ausgehende Feineinschnitte (8) aufweist, die im wesentlichen winkelförmig gestaltet sind und den Block (4) nur auf etwa ¾ seiner Breite durchsetzen.

4. Fahrzeugluftreifen nach Anspruch 3, dadurch gekennzeichnet, dass die Schenkel (9) der Feineinschnitte (8) parallel zu den ihnen benachbart liegenden Kanten (6) der Blöcke (4) verlaufen.

5. Fahrzeugluftreifen nach Anspruch 1, dadurch gekennzeichnet, dass die Blockreihen (2) zu beiden Seiten der eigentlichen Lauffläche (Breite B) die Rundschultern (1) des Reifens bilden.

6. Fahrzeugluftreifen nach Anspruch 1, dadurch gekennzeichnet, dass die Längserstreckung und/ oder die Quererstreckung der Blöcke (4) aufeinanderfolgender Blockreihen (2) unterschiedlich ist.

## Claims

1. Pneumatic vehicle tyre having a profiled tread surface for winter use and rows of blocks which are defined by grooves shaped in a zig-zag manner, whereby the blocks (4) are elongated so as to protrude with their longitudinal axis inclined relative to the circumferential direction of the tyre and form rows (2), which extend at right angles to the circumferential direction of the tyre, in such a manner that a block of one row terminates in front of a groove (5), such grooves being provided between adjacent blocks (4) of the adjacent row, and whereby also the rows (2) extend parallel to one another and form an acute angle with the transverse direction of the tyre, characterised in that the blocks (4) are hexagonal in shape and only have pairs of edges (7) which are parallel to one another, in that each edge (6) of the blocks (4) forms an angle with the transverse direction of the tyre and with the circumferential direction of the tyre, and in that the longitudinal axes of the blocks (4) of a row (2) extend in an inclined direction, and the blocks (4) of the adjacent row extend in the opposite inclined direction which is determined by an angle of approximately 30° to 50° in relation to the circumferential direction of the tyre.

2. Pneumatic vehicle tyre according to claim 1, characterised in that the acute angle, which the rows of blocks (2) form with the transverse direction of the tyre, is between 5° and 10°, preferably 7°.

3. Pneumatic vehicle tyre according to claim 1, characterised in that each block (4) has two finely cut incisions (8) extending from opposite edges, the incisions being substantially angular in shape and piercing the block (4) over only approximately ¾ of its width.

4. Pneumatic vehicle tyre according to claim 3, characterised in that the flanges (9) of the finely cut incisions (8) extend parallel to the edges (6) of the blocks (4) lying adjacent thereto.

5. Pneumatic vehicle tyre according to claim 1, characterised in that the rows of blocks (2) on both sides of the actual tread surface (width B) form the rounded shoulders (1) of the tyre.

6. Pneumatic vehicle tyre according to claim 1, characterised in that the longitudinal extension and/or the transverse extension of the blocks (4) of successive rows of blocks (2) is different.

## Revendications

1. Pneumatique de véhicule à bande de roulement profilée pour l'utilisation hivernale, comportant des rangées de blocs délimitées par des rainures en zig-zag, les blocs (4) étant allongés, étant disposés avec leur axe longitudinal incliné par rapport à la direction périphérique du pneumatique et formant des rangées (2) orientées perpendiculairement à la direction périphérique du pneumatique de telle sorte qu'un bloc d'une rangée se termine avant une rainure (5) qui est située entre des blocs adjacents (4) de la rangée adjacente, et en outre les rangées (2) étant orientées parallèlement entre elles et faisant un angle aigu avec la direction transversale du pneumatique, caractérisé en ce que les blocs (4) ont une forme hexagonale et comportent seulement des paires de côtés (7) mutuellement parallèles, en ce que chaque côté (6) des blocs (4) fait un angle avec la direction transversale du pneumatique et avec sa direction longitudinale et en ce que les axes longitudinaux des blocs (4) d'une rangée (2) sont orientés dans une direction oblique et ceux des blocs (4) de la rangée adjacente dans la direction oblique opposée, qui est définie par un angle d'environ 30 à 50° par rapport à la direction périphérique du pneumatique.

2. Pneumatique de véhicule selon la revendication 1, caractérisé en ce que l'angle aigu que font les rangées de blocs (2) avec la direction transversale du pneumatique est compris entre 5 et 10°, en étant de préférence de 7°.

3. Pneumatique de véhicule selon la revendication 1, caractérisé en ce que chaque bloc (4) comporte deux entailles fixes (8) partant de côtés opposés, qui ont sensiblement une forme anguleuse et qui traversent le bloc (4) seulement sur environ les ¾ de sa largeur.

4. Pneumatique de véhicule selon la revendication 3, caractérisé en ce que les branches (9) des entailles fines (8) sont orientées parallèlement aux côtés (6) des blocks (4) qui leur sont adjacents.

5. Pneumatique de véhicule selon la revendication 1, caractérisé en ce que les rangées de blocs (2) situées sur les deux côtés de la bande de roulement proprement dite (largeur B) forment les épaulements circulaires (1) du pneumatique.

6. Pneumatique de véhicule selon la revendication 1, caractérisé en ce que la dimension longitudinale et/ou la dimension transversale des blocs (4) de rangées de blocs (2) successives sont diffé-rentes.

*Fig.1*

*Fig.2*